# EUROPÄISCHE PATENTSCHRIFT

(11) **EP 0 406 227 B1**
(45) Veröffentlichungstag und Bekanntmachung des Hinweises auf die Patenterteilung: **20.10.1993**
(21) Anmeldenummer: 90890198.6
(22) Anmeldetag: 29.06.1990
(51) Int. Cl.: F16L 9/12, B29C 47/20

(54) **Extrudiertes Kunststoffrohr**
Extruded plastic pipe
Tuyau plastique extrudé

(30) Priorität: 29.06.1989 AT 1607/89
(43) Veröffentlichungstag der Anmeldung: 02.01.1991
(73) Patentinhaber: CINCINNATI MILACRON AUSTRIA, GESELLSCHAFT M.B.H., A-1232 Wien (AT)
(72) Erfinder: Hackl, Leopold, Dipl.-Ing., AT-2351 Wr. Neudorf (AT)
(74) Vertreter: Beer, Manfred, Dipl.-Ing.

(56) Entgegenhaltungen:
- US-A- 4 201 532
- US-A- 4 798 696
- US-A- 4 846 658
- PATENT ABSTRACTS OF JAPAN vol. 12, no. 78 (M-675) 11 März 1988, & JP-A-62 218122 (NIPPON KOKAN K K) 25 September 1987,

## Beschreibung

Die Erfindung bezieht sich auf ein extrudiertes Kunststoffrohr, insbesondere aus Polyolefinen hergestelltes Rohr, dessen Wand Fließlinien aufweist, die durch Teilung und die Wiedervereinigung des Massestromes bei der Extrusion bedingt sind.

Diese Fließlinien ergeben sich beim Extrudieren der Rohre aufgrund der dabei auftretenden Aufsplitterung des Massestromes, die durch die Halterung des Torpedos bedingt ist, und dessen Wiedervereinigung im Extrusionsspalt und die Eigenschaft der meisten Kunststoffe, insbesondere der Polyolefine, solche Aufteilungen zu memorieren. Durch die Fließlinien ergeben sich örtliche Unterschiede der Festigkeit der Wand des Rohres. So kann das Material im Bereich der Fließlinien quer zu diesen wirkende Kräfte nur in geringem Ausmaß aufnehmen.

Bei bekannten Rohren verlaufen die Fließlinien im wesentlichen radial von der Innenfläche zur Außenfläche des Rohres. Dadurch ergibt sich jedoch der Nachteil, daß bei einer Druckbeaufschlagung des Inneren des Rohres die dabei im Inneren seiner Wand in Umfangsrichtung des Rohrquerschnittes wirkenden Kräfte nur schlecht aufgenommen werden können. Aus diesem Grunde müssen solche Rohre relativ starkwandig ausgebildet werden.

Weiters wurden auch schon Rohre vorgeschlagen, bei denen die radial verlaufenden Fließlinien von der Innenwand des Rohres zu einer in Umfangsrichtung verlaufenden Fließlinie führen und von dieser gegen die ersteren versetzte radiale Fließlinien zur Außenwand des Rohres führen. Bei diesen ergibt sich gegenüber den ersteren eine gewisse Verbesserung, doch weisen solche Rohre trotzdem keine zufriedenstellende Festigkeit auf.

Gleiches gilt auch bezüglich von bekannten Rohren, deren Fließlinien im wesentlichen wabenförmig verlaufen.

Ziel der Erfindung ist es ein Rohr der eingangs erwähnten Art vorzuschlagen, das sich durch eine hohe Festigkeit auszeichnet.

Erfindungsgemäß wird dies dadurch erreicht, daß die Fließlinien sichelförmig verlaufen und im wesentlichen tangential in die Innen- und Außenfläche des Rohres einmünden.

Durch diese Maßnahmen ist sichergestellt, daß die Fließlinien mit der Umfangsrichtung des Querschnittes des Rohres nur einen sehr kleinen Winkel einschließen. Auf diese Weise werden die Fließlinien nur in einem sehr kleinen Außmaß senkrecht zu deren Erstreckung belastet, wenn das Rohr durch eine Druckbeaufschlagung seines Inneren in Umfangsrichtung seines Querschnittes belastet wird. Dadurch werden aber die bei den herkömmlichen Rohren stets vorhandenen Schwächungszonen weitgehend vermieden.

Nach einem weiteren Merkmal der Erfindung kann vorgesehen sein, daß sich die Fließlinien über einen Winkel von mindestens 180°, vorzugsweise über 270° oder mehr erstrecken.

Auf diese Weise ist sichergestellt, daß die Fließlinien mit der Umfangsrichtung des Querschnittes des Rohres einen nur sehr kleinen Winkel einschließen, wodurch die Senkrecht zu den Fließlinien wirkenden Kraftkomponenten bei einer Druckbeaufschlagung des Inneren eines solchen Rohres besonders klein gehalten werden. Dies ermöglicht es die Wandstärke des Rohres für eine gegebene Belastung auf ein Minimum zu reduzieren oder umgekehrt, bei in der Norm vorgegebenen Wanddicken erhöhte Standzeiten bzw. eine erhöhte Belastbarkeit zu erreichen.

In dieser Hinsicht kann weiters vorgesehen sein, daß jeder beliebige Radialschnitt des Rohres mindestens drei durch sichelförmig verlaufende Fließlinien begrenzte Schichten, vorzugsweise aber mehr, schneidet.

Damit ist eine sehr feste Struktur des Rohres erreicht.

Die Erfindung wird nun anhand der Zeichnung näher erläutert. Dabei zeigen:
Fig. 1 bis 3 Querschnitte durch herkömmliche Rohre, bei denen die Fließlinien sichtbar gemacht wurden, und
Fig. 4 einen Querschnitt durch ein erfindungsgemäßes Rohr, bei dem die Fließlinien sichtbar gemacht wurden.

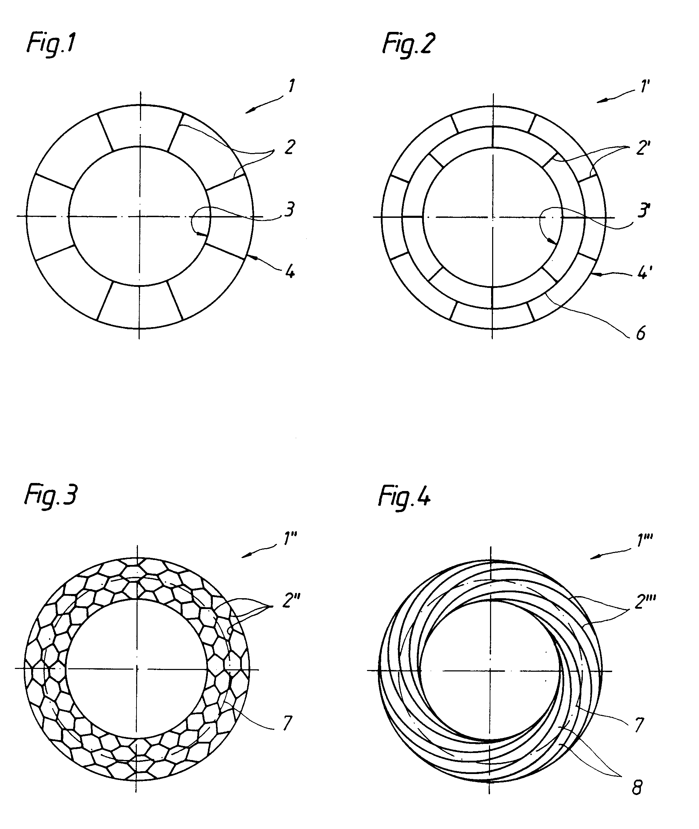

Die Fig. 1 zeigt ein herkömmliches Rohr 1, bei dem die Fließlinien durch Erwärmen des Rohres oder entsprechende Einfärbung sichtbar gemacht wurden.

Bei dem Rohr 1 verlaufen die Fließlinien 2 radial direkt von der Innenfläche 3 zur Außenfläche 4 des Rohres 1. Dadurch wirken aber z.B. durch eine Druckbeaufschlagung des Rohrinneren bedingte Belastungen in Umfangsrichtung des Querschnittes des Rohres und damit senkrecht zu den Fließlinien. Da aber das Material, aus dem das Rohr 1 hergestellt ist, z.B. Polyolefin, Kräfte quer zu den Fließlinien nur schlecht aufnehmen kann, müssen solche Rohre für eine vorgegebene Belastung relativ dickwandig ausgebildet werden.

Bei dem Rohr 1' nach der Fig. 2 verlaufen die Fließlinien 2' ebenfalls radial, doch erstrecken sich diese nur entweder zwischen der Außenfläche 4' und einer sich in Umfangsrichtung des Querschnittes erstreckenden Fließlinie 6, bzw. zwischen dieser und der Innenfläche 3' des Rohres 1'. Dabei sind die Fließlinien 2' gegeneinander versetzt, wodurch sich eine gewisse Verbesserung gegenüber dem Rohr 1 nach der Fig. 1 ergibt. Allerdings halten sich die Verbesserungen der Belastbarkeit eines solchen Rohres in bescheidenem Rahmen.

Bei dem Rohr 2'' nach der Fig. 3 verlaufen die Fließlinien 2'' wabenförmig, wobei alle Abschnitte der Fließlinien 2'' mit der Umfangsrichtung des Querschnittes des Rohres 1'', bzw. dessen mittlerer Faser 7 einen Winkel einschließen, der von 90° verschieden ist. Die Belastung der Fließlinien 2'' hängt vom Sinus des Winkels ab, den die Fließlinien 2'' mit der Umfangsrichtung des Querschnittes einschließen. Dadurch können Rohre nach der Fig. 3 etwas höher belastet werden als entsprechende Rohre nach der Fig. 1 und 2, doch ist deren Belastbarkeit nur einige Prozente größer als jene der Rohre nach der Fig. 2, da sich eben in verschiedenen Abschnitten, insbesondere in der Nähe der Außen- bzw. Innenfläche 3, 4 der Fließlinien 2'' doch relativ große Winkel zwischen diesen und der mittleren Faser, bzw. einer konzentrisch zu dieser verlaufenden Linie ergeben.

Bei dem erfindungsgemäßen Rohr 1''' nach der Fig. 4 verlaufen die Fließlinien 2''' sichelförmig und gehen tangential in die Außenfläche 4, bzw. die Innenfläche 3 über. Dies führt zu einem sehr kleinen Winkel zwischen diesen Fließlinien 2''' und der Umfangsrichtung des Querschnittes des Rohres 1''', in der die Belastung des Rohres durch einen in dessen Inneren herrschenden Überdruck wirkt. Dieser kleine Winkel bedeutet weiters, daß die Fließlinien 2''' quer zu deren Erstreckung nur durch sehr kleine Kräfte belastet werden, wodurch ein solches Rohr 1''' beinahe die Festigkeit des homogenen Materials, aus dem es hergestellt ist aufweist. Dies ist insbesondere dann der Fall, wenn sich jede Fließlinie 2''' zwischen deren Berührungspunkte mit der Außen- und der Innenfläche 3, 4 des Rohres 1''' über einen Winkel von mindestens 180°, vorzugsweise über 270° oder mehr erstrecken, da sich dadurch besonders kleine Winkel α zwischen der Umfangsrichtung des Querschnittes, bzw. der mittleren Faser 7 des Rohres und dessen Fließlinien 2''' ergeben.

Wie aus der Fig. 4 zu ersehen ist schneidet jeder Radialschnitt des Rohres 1''' mindestens drei durch sichelförmig verlaufende Fließlinien 2''' begrenzte Schichten 8 des Rohres 1''', wodurch sich eine sehr feste Struktur des Rohres ergibt.

## Patentansprüche

1. Extrudiertes Kunststoffrohr, insbesondere aus Polyolefinen hergestelltes Rohr, dessen Wand Fließlinien aufweist, die durch Teilung und die Wiedervereinigung des Massestromes bei der Extrudierung bedingt sind, dadurch gekennzeichnet, daß die Fließlinien (2''') sichelförmig verlaufen und im wesentlichen tangential in die Innen- und Außenfläche (3, 4) des Rohres (1''') einmünden.

2. Kunststoffrohr nach Anspruch 1, dadurch gekennzeichnet, daß sich die Fließlinien (2''') über einen Winkel von mindestens 180° erstrecken.

3. Kunststoffrohr nach Anspruch 2, dadurch gekennzeichnet, daß sich die Fließlinien (2''') über einen Winkel von 270° oder mehr erstrecken.

4. Kunststoffrohr nach einem der Ansprüche 1 bis 3, dadurch gekennzeichnet, daß jeder beliebige Radialschnitt des Rohres mindestens drei durch sichelförmig verlaufende FließLinien (2''') begrenzte Schichten, vozugsweise aber mehr, schneidet.

## Claims

1. Extruded plastics pipe, in particular pipe produced from polyolefins, the wall of which pipe has flow lines which are caused by division and the reuniting of the melt flow during extrusion, characterised in that the flow lines (2''') extend in a crescent-shaped manner and open in a substantially tangential manner into the inner and outer surfaces (3, 4) of the pipe (1''').

2. Plastics pipe according to Claim 1, characterised in that the flow lines (2''') subtend an angle of at least 180°.

3. Plastics pipe according to Claim 2, characterised in that the flow lines (2''') subtend an angle of 270° or more.

4. Plastics pipe according to one of Claims 1 to 3, characterised in that each and every radial section of the pipe intersects at least three, but preferably more, layers delimited by flow lines (2''') extending in a crescent-shaped manner.

## Revendications

1. Tube en matériau synthétique extrudé et, plus particulièrement, tube fait en polyoléfine dont la paroi comprend des lignes d'écoulement produites par la division et la réunion de la masse en écoulement lors de l'extrusion, caractérisé en ce que les lignes d'écoulement (2''') sont falciformes et débouchent pratiquement tangentiellement dans les surfaces intérieure (3) et extérieure (4) du tube (1''').

2. Tube selon la revendication 1, caractérisé en ce que les lignes d'écoulement (2''') s'étendent sur un angle d'au moins 180°.

3. Tube selon la revendication 2, caractérisé en ce que les lignes d'écoulement (2''') s'étendent sur un angle de 270° ou plus.

4. Tube selon l'une des revendications 1 à 3, caractérisé en ce qu'en coupe radial le tube comprend de préférence au moins trois couches délimitées par des lignes d'écoulement (2''') falciformes.
